(19) Europäisches Patentamt
European Patent Office
Office européen des brevets

(11) **EP 1 795 868 A2**

(12) **EUROPÄISCHE PATENTANMELDUNG**

(43) Veröffentlichungstag:
**13.06.2007 Patentblatt 2007/24**

(51) Int Cl.:
*G01D 4/00* (2006.01)  *G01D 5/26* (2006.01)
*G01D 5/36* (2006.01)

(21) Anmeldenummer: **06025249.1**

(22) Anmeldetag: **06.12.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **07.12.2005 DE 102005058440**

(71) Anmelder: **EL-ME Metering Systems GmbH 84072 Au i.d. Hallertau (DE)**

(72) Erfinder:
• **Lauderbach, Thomas**
  **93358 Train (DE)**
• **Froschermeier, Günther**
  **93326 Abensberg (DE)**
• **Eischer, Wolfgang**
  **82777 Kammerberg (DE)**

(74) Vertreter: **Strass, Jürgen**
  **Prinz & Partner GbR**
  **Rundfunkplatz 2**
  **80335 München (DE)**

(54) **Optoelektronische Vorrichtung zur Erfassung der Rotation eines Drehelements und Verfahren zur Auswertung der Signale einer solchen Vorrichtung**

(57) Eine optoelektronische Vorrichtung (10) dient zur Erfassung der Rotation eines Drehelements (18). Das Drehelement (18) hat auf einer ersten Seite (22) eine reflektierende Teilfläche (26). Es sind mehrere Sender (30, 32, 34) und ein einziger Empfänger (36) oder mehrere Empfänger und ein einziger Sender vorgesehen. Die bzw. der Sender (30, 32, 34) senden bzw. sendet in regelmäßiger Abfolge auf das Drehelement (18) gerichtete Lichtimpulse aus. Die von der reflektierenden Teilfläche (26) reflektierten Lichtimpulse der Sender (30, 32, 34) bzw. des Senders werden mittels einer Lichtleitvorrichtung (38), die zwischen den Sendern (30, 32, 34) bzw. dem Sender und dem Drehelement (18) angeordnet ist, auf den bzw. die Empfänger (36) gelenkt.

Fig. 1

**Beschreibung**

Die Erfindung betrifft eine optoelektronische Vorrichtung zur Erfassung der Rotation eines Drehelements, wobei das Drehelement auf einer ersten Seite eine reflektierende Teilfläche hat. Die Erfindung betrifft ferner ein Volumenmeßgerät mit einer solchen optoelektronischen Vorrichtung und ein Verfahren zur Auswertung der Signale einer solchen optoelektronischen Vorrichtung.

Eine Vorrichtung der oben genannten Art mit optischer Drehabtastung ist zum Beispiel aus der EP-A-0 380 046 bekannt und eignet sich zur Prüfung von Elektrizitäts-, Gas- und Wasserzählern, bei denen die Anzahl der Umdrehungen des Drehelements den Verbrauch angibt. In der Praxis ist es weiterhin bekannt, zur Erhöhung der Genauigkeit (Auflösung) und zur Bestimmung der Drehrichtung des Drehelements mehrere, in einem bestimmten Winkelabstand angeordnete Sender und Empfänger vorzusehen.

In der WO-A-2004/079302 ist eine optische Dreherfassungsvorrichtung für eine Zählwerkeinheit gezeigt, die eine rotierende, lichtundurchlässige Teilscheibe aufweist. Für die Dreherfassung sind zwei Lichtsender, die zeitlich versetzt kurze Lichtimpulse aussenden, und ein Empfänger vorgesehen. Die von den Lichtsendern emittierte Strahlung wird mit Hilfe von Spiegeln, die in der Zählwerkeinheit angeordnet sind, auf die den Lichtsendern abgewandte Seite der Scheibe gelenkt. Je nach Lage der Scheibe werden die Strahlen zum Empfänger durchgelassen oder nicht. Die Auswertung erfolgt anhand der vom Empfänger registrierten charakteristischen Signalfolge.

Aufgabe der Erfindung ist es, eine genaue und zuverlässige Dreherfassung mit möglichst wenigst wenigen teuren Bauteilen zu ermöglichen.

Gelöst wird diese Aufgabe durch eine optoelektronische Vorrichtung der eingangs genannten Art, bei der mehrere Sender und ein einziger Empfänger oder mehrere Empfänger und ein einziger Sender vorgesehen sind, wobei die bzw. der Sender in regelmäßiger Abfolge auf das Drehelement gerichtete Lichtimpulse aussenden bzw. aussendet und die von der reflektierenden Teilfläche reflektierten Lichtimpulse der Sender bzw. des Senders mittels einer Lichtleitvorrichtung, die zwischen den Sendern bzw. dem Sender und dem Drehelement angeordent ist, auf den bzw. die Empfänger gelenkt werden. Im Gegensatz zu bisher üblichen Vorrichtungen, bei denen jedem Sender ein separater Empfänger zugeordnet ist, erfordert die erfindungsgemäße Vorrichtung dank der Lichtleitvorrichtung nur einen einzigen Empfänger (oder nur einen einzigen Sender). Dies wirkt sich nicht nur günstig auf den Stromverbrauch, sondern wegen der geringeren Ausfallwahrscheinlichkeit auch auf die Zuverläsigkeit der Vorrichtung aus.

Die gemäß der Erfindung vorgesehene Anordnung der Lichtleitvorrichtung zwischen dem bzw. den Sendern und dem Drehelement hat den besonderen Vorteil, daß keine zusätzlichen Bauteile in die Zählwerkeinheit integriert werden müssen. Somit können bestehende Zählwerkeinheiten mit Drehelementen, die eine reflektierende Teilfläche aufweisen, weiter verwendet werden. Die für die Dreherfassung notwendigen optischen Komponenten (Sender, Empfänger und Lichtleitvorrichtung) können als vormontiertes Dreherfassungsmodul zusammengefaßt und auf eine bestehende Zahlwerkeinheit aufgesetzt werden, ohne daß an der Zählwerkeinheit Veränderungen vorgenommen werden müssen. Ein solches Modul hat wiederum den Vorteil, daß es zum Schutz gegen das Eindringen von Fremdkörpern und Flüssigkeiten gekapselt werden kann. Ein weiterer Vorteil der Lichtleitvorrichtung ist, daß sie keine mechanischen Gehäuseöffnungen/-durchbrüche benötigt (weder in der Zählwerkeinheit noch im Dreherfassungsmodul), die nach der Montage aufwendig abgedichtet werden müßten.

Gemäß einer ersten Ausführungsform der Erfindung ist die Lichtleitvorrichtung ein lichtdurchlässiges, prismenartiges Bauteil mit Lichteintritts- und Lichtaustrittsflächen, an denen Lichtstrahlen gebrochen werden. Ein solches Bauteil kann mit einem vertretbaren Kostenaufwand hergestellt werden. Die Brechung der von den Sendern emittierten Strahlen an den Lichteintritts- und Lichtaustrittsflächen wird gezielt dazu genutzt, die Strahlen zum Empfänger zu leiten.

Gemäß einer zweiten Ausführungsform der Erfindung weist die Lichtleitvorrichtung Flächen auf, an denen Lichtstrahlen wenigstens teilweise reflektiert werden. Es ist selbstverständlich auch eine Kombination von Lichtbrechung und (Total)Reflexion möglich.

Vorzugsweise ist die Lichtleitvorrichtung so gestaltet, daß sie die von den Sendern ausgesendeten Lichtimpulse auf die erste Seite des Drehelements lenkt, d.h. die Lichtstrahlen werden auch vor der Reflexion am Drehelement mit Hilfe der Lichtleitvorrichtung geführt. Dadurch ergibt sich eine größere Freiheit bei der Wahl der Anordnung und Ausrichtung der Sender.

Um den Signal-/Rauschabstand zu verbessern, ist eine Lichtleitvorrichtung vorteilhaft, die in der Lage ist, Lichtimpulse zu bündeln. Sowohl beim Senden als auch speziell beim Empfangen ist eine Bündelung oder Fokussierung der Lichtimpulse nützlich.

Für eine Auswertung der Dreherfassung reicht es aus, daß die Frequenz, mit der die Lichtimpulse ausgesendet werden, nicht wesentlich größer als die maximale Umdrehungsfrequenz des Drehelements ist. Bereits bei geringeren Frequenzen führt eine Drehung des Drehelements zu einer Änderung der vom Empfänger registrierten Signalfolge, die einen Rückschluß auf die jeweilige Lage und auch auf die Drehrichtung des Drehelements zuläßt.

Die bevorzugte Ausführungsform der Erfindung sieht drei Sender vor, die in einem Winkelabstand von 120° angeordnet sind. Die Erfindung ist aber nicht auf einen solchen Aufbau beschränkt.

Zur Bestimmung der Drehrichtung, des aktuellen Drehwinkels und der Anzahl der Umdrehungen des Drehelements ist eine Auswerteeinheit vorgesehen, der die vom Empfänger registrierte Signalfolge zugeführt wird. Die Auswerteeinheit kann Teil des Dreherfassungsmoduls oder einer ausgelagerten Auswertestation sein.

Die Erfindung schafft auch ein Volumenmeßgerät mit einer erfindungsgemäßen optoelektronischen Vorrichtung, wobei das Drehelement Bestandteil einer Zählwerkeinheit des Volumenmeßgeräts ist und die Lichtleitvorrichtung außerhalb der Zählwerkeinheit angeordnet ist.

Die Erfindung schafft schließlich ein Verfahren zur Auswertung der Signale einer erfindungsgemäßen optoelektronischen Vorrichtung mit folgenden Schritten:

- Aufteilung des Drehelements in eine durch die Anzahl der Sender und die Geometrie der reflektierenden Teilfläche bestimmte Anzahl von Segmenten,

- Zuweisung eines binären Werts für jeden Lichtimpuls entsprechend dem jeweiligen Zustand des Empfängers nach dem Lichtimpuls,

- Bildung einer Bit-Folge, deren Länge der Anzahl der Sender entspricht, und

- Bestimmung eines aktuellen Segments, das repräsentativ für die aktuelle Lage des Drehelements ist, durch Zuweisung eines Segments in Abhängigkeit der Bit-Folge.

Die Erfindung wird nachfolgend anhand einer bevorzugten Ausführungsform unter Bezugnahme auf die beigefügten Zeichnungen genauer beschrieben. In den Zeichnungen zeigen:

- Figur 1 eine Schnittansicht eines Teils eines Volumenmeßgerätes mit einer optoelektronischen Vorrichtung;

- Figur 2 eine perspektivische Ansicht der Lichtleitvorrichtung gemäß einer ersten Ausführungsform der Erfindung;

- Figuren 3a, 3b eine Seitenansicht bzw. eine Draufsicht auf eine Lichtleitvorrichtung gemäß einer zweiten Ausführungsform der Erfindung;

- Figur 3c eine vergrößerte Schmittansicht entlang der Linie A-A in Figur 4;

- Figur 4 einen beispielhaften Strahlverlauf in einem Volumenmeßgerät gemäß der zweiten Ausführungsform der Erfindung;

  Figuren 5a, 5b Draufsichten auf die optoelektronische Vorrichtung in verschiedenen Zuständen des Drehelements;

- Figur 6 eine schematische Draufsicht auf die optoelektronische Vorrichtung zur Erläuterung der Signalauswertung; und

- Figur 7 eine Tabelle mit den vom Empfänger registrierten Signalen in den verschiedenen Zuständen des Drehelements.

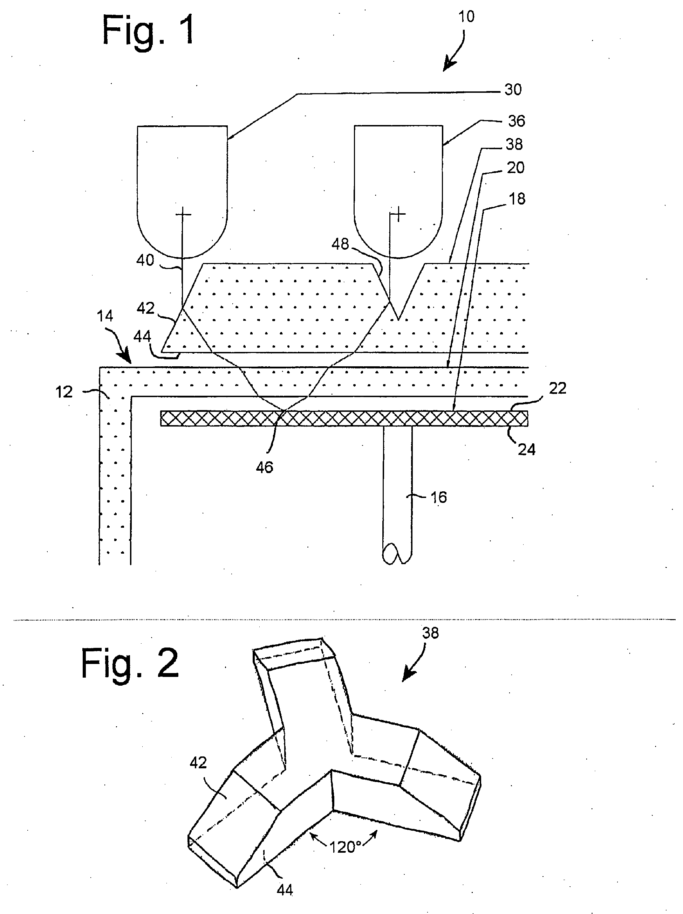

In Figur 1 ist ein Teil eines Volumenmeßgeräts 10 mit einer in einem Gehäuse 12 angeordneten Zählwerkeinheit 14 dargestellt. Das Volumenmeßgerät 10 kann z.B. ein Warmwasserverbrauchsmeßgerät sein. Eine auf einer Achse 16 gelagerte Drehscheibe 18 liegt einer transparenten Wand 20 des Gehäuses 12 der Zählwerkeinheit 14 gegenüber. Die Drehscheibe 18 führt in bekannter Weise eine dem verbrauchten Medium proportionale Anzahl von Umdrehungen aus.

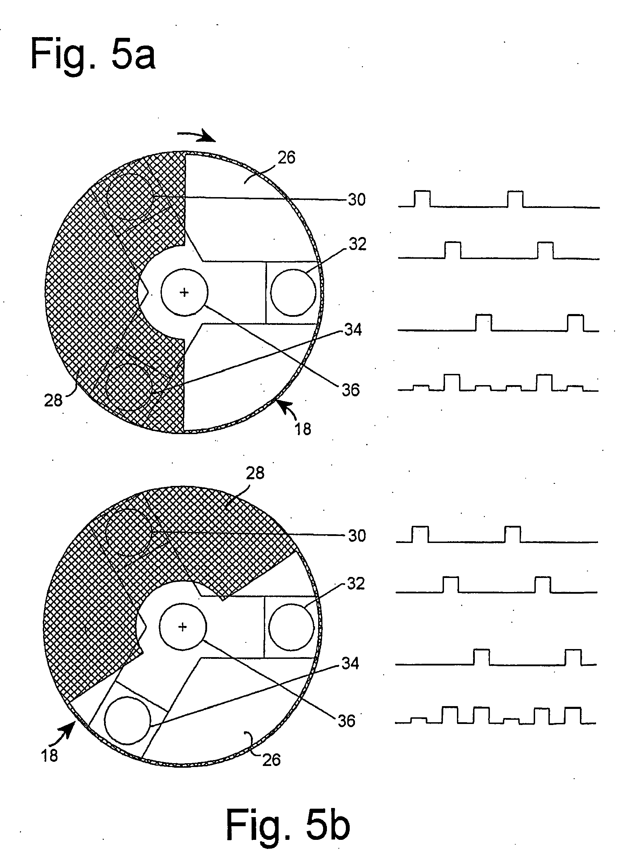

Die Drehscheibe 18 hat eine der transparenten Gehäusewand 20 zugewandte erste Seite 22 und eine der Gehäusewand 20 abgewandte Seite 24. Die erste Seite 22 weist eine reflektierende Teilfläche 26 und eine nicht-reflektierende (absorbierende) Teilfläche 28 auf (siehe Figuren 5a und 5b). Bei dem dargestellten Ausführungsbeispiel nimmt jede Teilfläche 26, 28 einen Winkelbereich von 180° ein; es ist grundsätzlich aber auch eine andere Aufteilung möglich. Außerdem kann der nicht-reflektierende Teil 28 der Drehscheibe 18 auch komplett ausgespart sein (im vorliegenden Fall könnte die Drehscheibe 18 dementsprechend auch als Halbscheibe ausgeführt sein).

An das Gehäuse 12 ist ein gekapseltes optoelekronisches Dreherfassungsmodul angebracht. Das Dreherfassungsmodul umfaßt drei Lichtsender 30, 32, 34, die im montierten Zustand des Dreherfassungsmoduls in gleichem Abstand zum Drehzentrum gegenüber der Drehscheibe 18 in einem Winkelabstand von jeweils 120° angeordnet sind. Die Lichtsender 30, 32, 34 werden so angesteuert, daß sie in einer zyklischen Abfolge kurze Lichtimpulse aussenden. Konzentrisch zur Drehachse 16 der Drehscheibe 18 ist ein Empfänger 36 angebracht, der mit einer (nicht dargestellten) Auswerteeinheit verbunden ist. Zwischen den Sendern 30, 32, 34 und dem Empfänger 36 einerseits und der Drehscheibe 18 andererseits ist außerhalb des Gehäuses 12 eine Lichtleitvorrichtung 38 angeordnet, die Bestandteil des Dreherfassungsmoduls ist.

Die in Figur 2 einzeln dargestellte Lichtleitvorrichtung 38 gemäß einer ersten Ausführungsform der Erfindung ist ein lichtdurchlässiges, prismenähnliches Bauteil, mit Lichteintritts- und Lichtaustrittsflächen. Die Geometrie der Lichtleitvorrichtung 38 ist so gestaltet, daß jeweils ein von einem Sender 30, 32, 34 emittierter Lichtstrahl 40 an einer ersten Fläche 42 in die Lichtleitvorrichtung 38 eintritt und an einer zweiten Fläche 44 wieder austritt, bevor der Lichtstrahl 40 nach Durchtritt durch die transparente Gehäusewand 20 an einer vorbestimmten Stelle 46 und unter einem vorbestimmten Winkel auf die erste Seite 22 der Drehscheibe 18 trifft. Der in Figur 1 dargestellte Strahlverlauf entspricht dem Idealfall. In der Praxis ergibt sich eine gewisse Streuung, da jeder Sender 30, 32, 34 einen sog. Öffnungswinkel hat.

Befindet sich an der Auftreffstelle 46 gerade die reflektierende Teilfläche 26 der Drehscheibe 18, wird der Lichtstrahl 40 reflektiert und durchdringt erneut die Gehäusewand 20. Der Lichtstrahl 40 tritt dann durch die Fläche 44 wieder in die Lichtleitvorrichtung 38 ein und verläßt diese durch die Austrittsfläche 48. Die Flächen 42, 44, 48 der Lichtleitvorrichtung 38, insbesondere deren Neigung, sind so auf die Anordnung und Ausrichtung der Sender 30, 32, 34 und des Empfängers 36 abgestimmt, daß die Brechung eines Lichtstrahls 40 beim Ein- und Austritt durch die Flächen 42, 44, 48 einer gezielten Strahlführung gleichkommt, wie in Figur 1 gezeigt. Die Lichtleitvorrichtung 38 sorgt hierbei jeweils für eine Bündelung des Lichtstrahls 40, wodurch dessen Streuung wenigstens teilweise kompensiert wird. Am Ende trifft der Lichtstrahl 40 zielgerichtet auf den Empfänger 36, der ein entsprechendes Reflexionssignal registriert und an die Auswerteinheit weitergibt.

Trifft ein Lichtstrahl 40 dagegen auf die nicht-reflektierende Teilfläche 28 der Drehscheibe 18, wird der Lichtstrahl 40 zum Großteil absorbiert und der Empfänger 36 registriert kein oder nur ein sehr schwaches Signal, das sich ausreichend deutlich von einem Reflexionssignal der reflektierenden Fläche 26 der Drehscheibe 18 unterscheidet.

Aufgrund der symmetrischen Gestaltung der Lichtleitvorrichtung 38 und der Sender 30, 32, 34 ist bei gleicher Sendeleistung gewährleistet, daß der zentral angeordnete Empfänger 36 von jedem Sender unter gleichen Voraussetzungen die gleiche Lichtmenge empfängt.

Alternativ zum zuvor beschriebenen Aufbau ist auch eine Konstruktion möglich, bei der eine Reflexion oder eine Kombination aus Brechung und Reflexion des Lichtstrahls erfolgt.

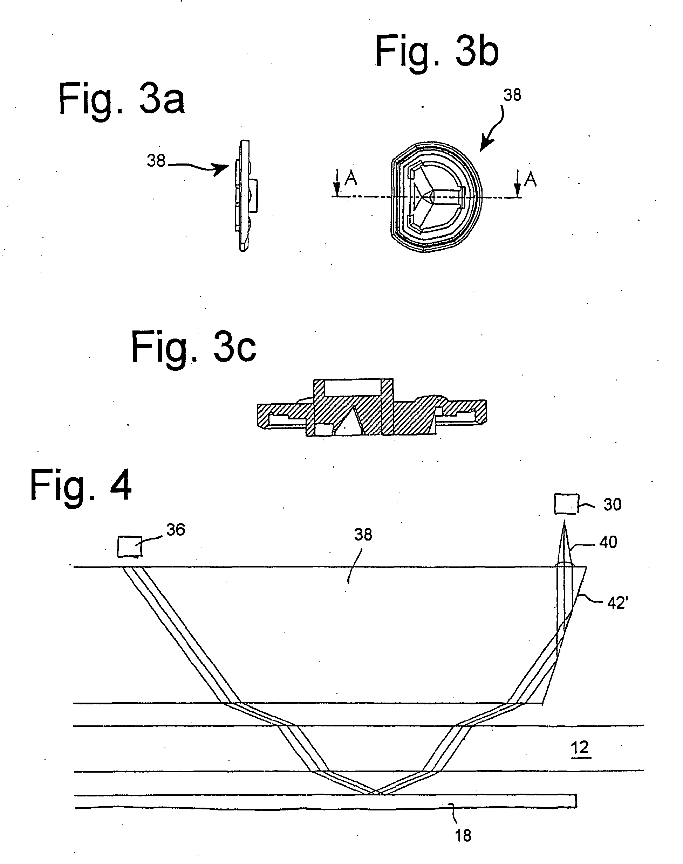

In den Figuren 3a bis 3c ist eine solche alternative Ausführungsform der Lichtleitvorrichtung 38 dargestellt. Der wesentliche Unterschied zur zuvor beschriebenen Lichtleitvorrichtung besteht darin, daß die von den Sendern 20, 32, 34 emittierten Lichtstrahlen 40 an einer dem jeweiligen Sender gegenüberliegenden Fläche senkrecht in die Lichtleitvorrichtung 38 eintreten und anschließend an einer Seitenfläche 42' im wesentlichen totalreflektiert werden, wie in Figur 4 gezeigt. Die Seitenfläche 42' weist daher im Vergleich zur Fläche 42 der zuvor beschriebenen ersten Ausführungsform eine entgegengesetzte Neigung auf. Der restliche Strahlverlauf entspricht dann aber wieder dem der Figur 1.

In den Figuren 5a und 5b sind beispielhaft zwei aufeinanderfolgende Zustände dargestellt, jeweils mit den zeitlichen Signalfolgen, die von den einzelnen Sendern 30, 32, 34 ausgegeben werden und der entsprechenden Signalfolge, die vom Empfänger 36 registriert wird. Im Zustand der Figur 5a trifft nur der Lichtimpuls des Senders 32 auf die reflektierende Teilfläche 26 und wird vom Empfänger 36 registriert. Im Zustand der Figur 5b, der sich nach einer Drehung der Drehscheibe 18 um etwa 60° ergeben hat, bestrahlt neben dem Sender 32 nun auch der Sender 34 die reflektierende Teilfläche 26. Die Änderung der registrierten Signalfolge deutet also auf eine Drehung der Drehscheibe 18 mindestens um einen bestimmten Winkel hin (beim dargestellten Ausführungsbeispiel beträgt dieser Winkel 60°). Aus dem Vergleich der neuen mit der alten Signalfolge kann zudem auf die Drehrichtung geschlossen werden.

Die Ansteuerung der Sender 30, 32, 34 und ein darauf abgestimmtes, besonderes Auswerteverfahren ermöglichen es, daß die Lichtimpulse mit einer Frequenz ausgesendet werden können, die nicht wesentlich größer als die maximale Umdrehungsfrequenz der Drehscheibe 18 sein muß, wie sich aus der nachfolgenden Erläuterung einer möglichen Betriebsart und der speziellen Signalauswertung ergibt.

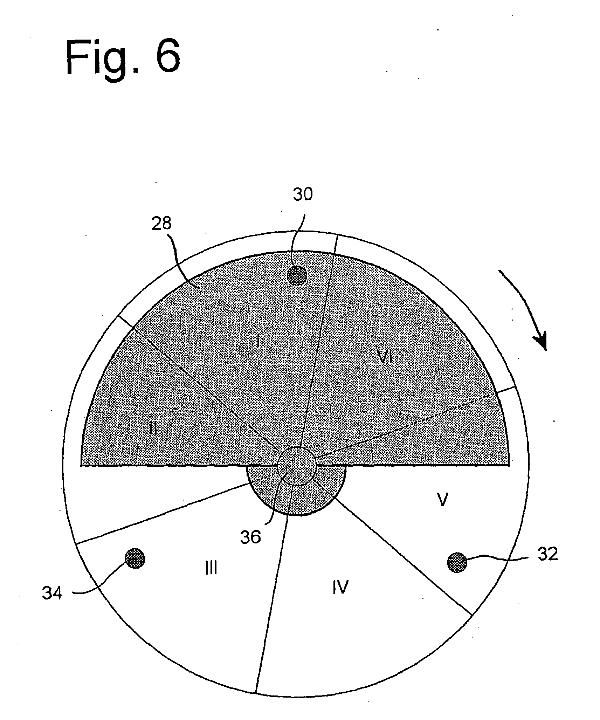

Die optische Abtastung der Drehscheibe 18 erfolgt, wie bereits beschrieben, mittels der drei Sender 30, 32, 34, die in einem Winkelabstand von jeweils 120° angeordnet sind. Die Zählrichtung der Sender 30, 32, 34 ist gleich der Drehrichtung der Drehscheibe 18, gemäß dem Beispiel der Figuren 5a und 5b also rechtsdrehend oder im Uhrzeigersinn. Die abzutastende Drehscheibe 18 ist zur einen Hälfte reflektierend und zur anderen nicht-reflektierend, so daß eine volle Umdrehung der Drehscheibe 18 in sechs Segmente I bis VI unterteilt werden kann (siehe Figur 6). Diese Segmente werden entgegen der Drehrichtung der Drehscheibe 18 definiert, also linksdrehend. Dadurch wird erreicht, daß unabhängig von der Drehrichtung nur positive Segment-Differenzen resultieren, wodurch die Auswertung mit Hilfe einer einzigen vorzeichenlosen Tabelle erfolgen kann.

Über die Lichtleitvorrichtung werden die Lichtimpulse der drei Sender 30, 32, 34 auf den Empfänger 36 im Zentrum gelenkt. Es werden drei Lichtimpulse (einer von jedem Sender) ausgesendet, wobei nach jedem Lichtimpuls der Zustand des Empfängers 36 ermittelt wird. Für die nachfolgende Auswertung werden für Reflexion bzw. Nicht-Reflexion binäre Werte vergeben: 1 bedeutet Reflexion, 0 keine Reflexion. Diese Zustände werden in einem Schieberegister gesammelt. Der daraus resultierende 3-Bit-Wert (erstes Bit entspricht dem ersten Sender usw.) stellt dann die Stellung der Drehscheibe 18 dar. Über die Tabelle 1 wird bei einer gültigen Abtastung ein bestimmtes Segment zugewiesen (aktuelles Segment), das repräsentativ für die aktuelle Lage der Drehscheibe 18 ist.

Tabelle 1

| 000 | Index 0 | Störung |
|-----|---------|---------|
| 001 | Index 1 | Abtastung im Segment II |
| 010 | Index 2 | Abtastung im Segment IV |
| 011 | Index 3 | Abtastung im Segment III |
| 100 | Index 4 | Abtastung im Segment VI |
| 101 | Index 5 | Abtastung im Segment I |
| 110 | Index 6 | Abtastung im Segment V |
| 111 | Index 7 | Störung |

Aus der Berechnung

$$(\text{altes Segment}) - (\text{aktuelles Segment}) = \text{Segment-Differenz}$$

wird die Segment-Differenz ermittelt. Im Falle einer negativen Segment-Differenz wird diese durch Addition von 6 zu einer positiven Segment-Differenz ergänzt. Der Zählfortschritt ergibt sich aus der Segment-Differenz-Tabelle (Tabelle 2).

Tabelle 2

| Segment-Differenz | Zählfortschritt | Richtung |
|-------------------|-----------------|----------|
| 0 | 0 | Stillstand |
| 1 | +1 | vorwärts |
| 2 | +2 | vorwärts |
| 3 | +3 | vorwärts |
| 4 | -2 | rückwärts |
| 5 | -1 | rückwärts |
| 6=0 | 0 | Stillstand |

Der Zählfortschritt wird aufaddiert. Eine ganze Umdrehung der Drehscheibe 18 ergibt einen Zählfortschritt von 6. Bei einer Umdrehungsgeschwindigkeit der Drehscheibe 18 von maximal 1,5 Umdrehungen pro Sekunde entspricht das einem Zählfortschritt von 9 pro Sekunde.

Die Abtast-Intervalle sind so gewählt, daß die maximale Umdrehungsgeschwindigkeit sicher abgetastet werden kann. Die Differenz zwischen zwei Abtastungen wird einer Wertung unterworfen, um Vorwärts- oder Rückwärts-Umdrehungen zu identifizieren. Mit einem Abtast-Intervall von 4 Hz ist vorwärts eine Umdrehungsgeschwindigkeit von maximal 1,998 Umdrehungen pro Sekunde möglich, für den Rückwärtslauf wird eine maximale Drehfrequenz von 1,33 Hz erreicht.

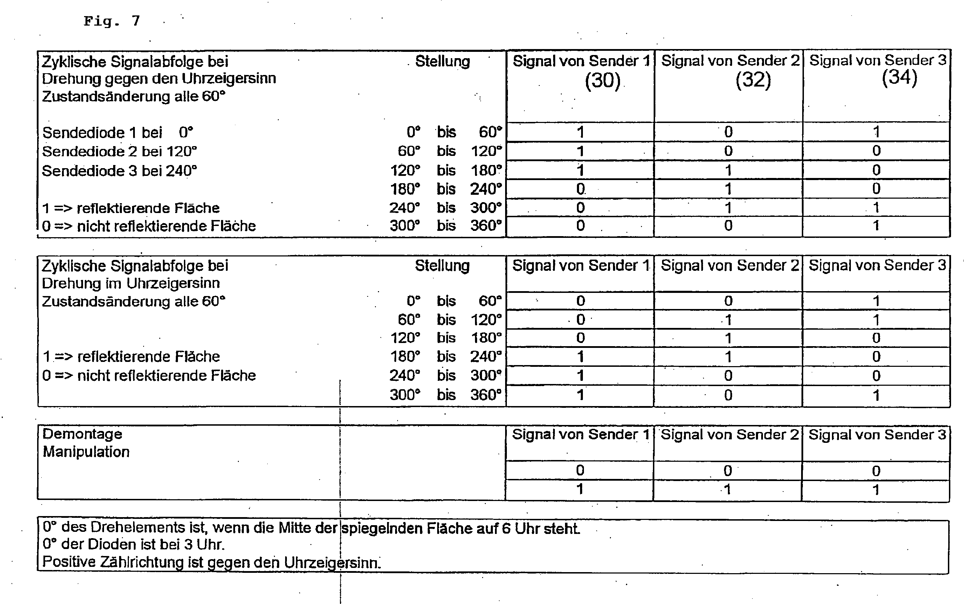

In Figur 7 sind die vom Empfänger 36 registrierten Signale in allen Zuständen der Drehscheibe 18 in Form einer selbsterklärenden Tabelle nochmals im Überblick dargestellt.

Alternativ können die Sender 30, 32, 34 auch gleichzeitig mehrere kurze Lichtimpulse aussenden. In diesem Fall kann aus den jeweiligen Pegelhöhen der Signalfolge die Drehung bestimmt werden.

Es kann auch ein Betrieb vorgesehen sein, bei dem zur Feststellung einer Drehung der Drehscheibe 18 zuerst geprüft wird, ob sich der Zustand des Signals eines bestimmten Senders geändert hat. In diesem Fall kann durch gleichzeitiges Aussenden von Lichtimpulsen der beiden anderen Sender festgestellt werden, wie weit sich die Drehscheibe 18 gedreht hat. Dazu wird der Lichtpegel im Empfänger 36 gemessen und mit Werten einer Tabelle verglichen. Hat sich das Sendersignal dagegen nicht geändert, kann das Aussenden der anderen Lichtimpulse unterbleiben, was einer Energieeinsparung gleichkommt.

Die erfindungsgemäße optoelektronische Vorrichtung bietet auch eine Sicherheit gegen Mißbrauch. Eine Demontage des Dreherfassungsmoduls oder eine Manipulation am Volumenmeßgerät führt dazu, daß die Sender 30, 32, 34 und der Empfänger 36 nicht mehr gegenüber der Drehscheibe 18 angeordnet sind. Der Empfänger registriert in diesem Fall von jedem Sender 30, 32, 34 das gleiche Signal (innerhalb eines bestimmten, für die Auswerteeinheit ausreichenden Toleranzbereichs), so daß der Mißbrauch sofort erkennbar ist.

Die Einstellung eines Schwellwerts, dessen Überschreiten ein zu registrierendes Signal kennzeichnet, kann vorteilhaft auf folgende Weise vorgenommen werden. Zunächst werden im montierten Zustand des Dreherfassungsmoduls die Signalpegel der einzelnen Sender 30, 32, 34 gemessen. Da mindestens ein Sender vollständig reflektiert und mindestens ein anderer Sender vollständig absorbiert wird, wird aus diesen beiden Meßwerten der Mittelwert durch Addition und Teilen durch 2 bestimmt. Dieser Mittelwert kann mittels verschiedener Methoden (D/A-Wandler, Slope-Verfahren, etc.) an einem Komparator als Schwellwert eingestellt werden. Dies ermöglicht eine sehr kompakte, stromsparende Auswerteschaltung, da keine laufende A/D-Wandlung erforderlich ist.

Die Sender 30, 32, 34 können auch unterschiedliche Lichtstärken bzw. Leuchtdichten haben und/oder in anderen Winkelabständen als 120° angeordnet sein. Insbesondere eine unsymmetrische Verteilung der Sender 30, 32, 34 erweitert die konstruktiven Möglichkeiten bei der Gestaltung der Lichtleitvorrichtung 38.

Prinzipiell ist auch eine Konstruktion mit umgekehrtem Sende-/Empfangsverlauf möglich. In diesem Fall sind die Sender durch Empfänger und der Empfänger durch einen Sender ersetzt.

## Patentansprüche

1. Optoelektonische Vorrichtung zur Erfassung der Rotation eines Drehelements (18), wobei das Drehelement (18) auf einer ersten Seite (22) eine reflektierende Teilfläche (26) hat, **dadurch gekennzeichnet, daß** mehrere Sender (30, 32, 34) und ein einziger Empfänger (36) oder mehrere Empfänger und ein einziger Sender vorgesehen sind, wobei die bzw. der Sender (30, 32, 34) in regelmäßiger Abfolge auf das Drehelement (18) gerichtete Lichtimpulse aussenden bzw. aussendet und die von der reflektierenden Teilfläche (26) reflektierten Lichtimpulse der Sender (30, 32, 34) bzw. des Senders mittels einer Lichtleitvorrichtung (38), die zwischen den Sendern (30, 32, 34) bzw. dem Sender und dem Drehelement (18) angeordnet ist, auf den bzw. die Empfänger (36) gelenkt werden.

2. Optoelektronische Vorrichtung nach Anspruch 1, **dadurch gekennzeichnet, daß** die Sender (30, 32, 34) die Lichtimpulse in zyklischer Abfolge nacheinander aussenden.

3. Optoelektronische Vorrichtung nach Anspruch 1 oder 2, **dadurch gekennzeichnet, daß** die Sender (30, 32, 34) die Lichtimpulse in zyklischer Abfolge gleichzeitig aussenden.

4. Optoelektronische Vorrichtung nach einem der vorhergehenden Ansprüche, **dadurch gekennzeichnet, daß** die Lichtleitvorrichtung (38) ein lichtdurchlässiges, prismenartiges Bauteil mit Lichteintritts- und Lichtaustrittsflächen ist, an denen Lichtstrahlen (40) gebrochen werden.

5. Optoelektronische Vorrichtung nach einem der vorhergehenden Ansprüche, **dadurch gekennzeichnet, daß** die Lichtleitvorrichtung (38) Flächen (42') aufweist, an denen Lichtstrahlen (40) wenigstens teilweise reflektiert werden.

6. Optoelektronische Vorrichtung nach einem der vorhergehenden Ansprüche, **dadurch gekennzeichnet, daß** die Lichtleitvorrichtung (38) so gestaltet ist, daß sie die von den Sendern (30, 32, 34) ausgesendeten Lichtimpulse auf die erste Seite (22) des Drehelements (18) lenkt.

7. Optoelektronische Vorrichtung nach einem der vorhergehenden Ansprüche, **dadurch gekennzeichnet, daß** die Lichtleitvorrichtung (38) Lichtimpulse bündelt.

8. Optoelektronische Vorrichtung nach einem der vorhergehenden Ansprüche, **dadurch gekennzeichnet, daß** die Frequenz, mit der die Lichtimpulse ausgesendet werden, nicht wesentlich größer als die maximale Umdrehungsfrequenz des Drehelements (18) ist.

9. Optoelektronische Vorrichtung nach einem der vorhergehenden Ansprüche, **dadurch gekennzeichnet, daß** die Lichtleitvorrichtung (38) so gestaltet ist und die Sender (30, 32, 34) und der Empfänger (36) so angeordnet sind, daß der Empfänger (36) von jedem Sender (30, 32, 34) die gleiche Lichtmenge empfängt.

10. Optoelektronische Vorrichtung nach einem der vorhergehenden Ansprüche, **dadurch gekennzeichnet, daß** drei Sender (30, 32, 34) vorgesehen sind.

**11.** Optoelektronische Vorrichtung nach Anspruch 10, **dadurch gekennzeichnet, daß** die Sender (30, 32, 34) in einem Winkelabstand von 120° angeordnet sind.

**12.** Optoelektronische Vorrichtung nach einem der vorhergehenden Ansprüche, **gekennzeichnet durch** eine Auswerteeinheit, der die vom Empfänger (36) registrierte Signalfolge zugeführt wird.

**13.** Optoelektronische Vorrichtung nach Anspruch 12, **dadurch gekennzeichnet, daß** in der Auswerteeinheit ein Schwellwert abgelegt ist, dessen Überschreiten ein zu registrierendes Signal kennzeichnet, wobei der Schwellwert durch Messung der Signalpegel der jeweiligen Sender (30, 32, 34), Addition eines gemessenen Reflexions- und eines gemessenen Absorptionswerts und anschließendes Teilen durch 2 erhalten wird.

**14.** Volumenmeßgerät mit einer optoelektronischen Vorrichtung nach einem der vorhergehende Ansprüche, wobei das Drehelement (18) Bestandteil einer Zählwerkeinheit (14) des Volumenmeßgeräts (10) ist und die Lichtleitvorrichtung (38) außerhalb der Zählwerkeinheit (14) angeordnet ist.

**15.** Volumenmeßgerät nach Anspruch 14, **dadurch gekennzeichnet, daß** die Zählwerkeinheit (14) und die optoelektronische Vorrichtung in separaten Gehäusen untergebracht sind.

**16.** Verfahren zur Auswertung der Signale einer optoelektronischen Vorrichtung nach einem der Ansprüche 1 bis 13, **gekennzeichnet durch** die folgenden Schritte:

- Aufteilung des Drehelements (18) in eine **durch** die Anzahl der Sender (30, 32, 34) und die Geometrie der reflektierenden Teilfläche (26) bestimmte Anzahl von Segmenten (I-VI),
- Zuweisung eines binären Werts für jeden Lichtimpuls entsprechend dem jeweiligen Zustand des Empfängers (36) nach dem Lichtimpuls,
- Bildung einer Bit-Folge, deren Länge der Anzahl der Sender (30, 32, 34) entspricht, und
- Bestimmung eines aktuellen Segments, das repräsentativ für die aktuelle Lage des Drehelements (18) ist, **durch** Zuweisung eines Segments in Abhängigkeit der Bit-Folge.

**17.** Verfahren nach Anspruch 16, **gekennzeichnet durch** die folgenden Schritte:

- Zuweisung einer Zahl zu jedem Segment, und
- Bestimmung eines Zählfortschritts **durch** Ermittlung der Differenz zwischen den Segmentzahlen des zuletzt aktuellen und des aktuellen Segments und Zuweisung eines von der Differenz abhängigen Zählfortschrittwerts, wobei die Differenz gewertet wird, um zwischen einer Vorwärts- und einer Rückwärts-Drehung zu unterscheiden.

## Fig. 1

## Fig. 2

# Fig. 3b

# Fig. 3a

38

38

A

A

# Fig. 3c

# Fig. 4

36

30

38

40

42'

12

18

# Fig. 5a

# Fig. 5b

# Fig. 6

Fig. 7

| Zyklische Signalabfolge bei Drehung gegen den Uhrzeigersinn Zustandsänderung alle 60° | Stellung | | Signal von Sender 1 (30) | Signal von Sender 2 (32) | Signal von Sender 3 (34) |
|---|---|---|---|---|---|
| Sendediode 1 bei 0° | 0° bis | 60° | 1 | 0 | 1 |
| Sendediode 2 bei 120° | 60° bis | 120° | 1 | 0 | 0 |
| Sendediode 3 bei 240° | 120° bis | 180° | 1 | 1 | 0 |
| | 180° bis | 240° | 0 | 1 | 0 |
| 1 => reflektierende Fläche | 240° bis | 300° | 0 | 1 | 1 |
| 0 => nicht reflektierende Fläche | 300° bis | 360° | 0 | 0 | 1 |

| Zyklische Signalabfolge bei Drehung im Uhrzeigersinn Zustandsänderung alle 60° | Stellung | | Signal von Sender 1 | Signal von Sender 2 | Signal von Sender 3 |
|---|---|---|---|---|---|
| | 0° bis | 60° | 0 | 0 | 1 |
| | 60° bis | 120° | 0 | 1 | 1 |
| | 120° bis | 180° | 0 | 1 | 0 |
| 1 => reflektierende Fläche | 180° bis | 240° | 1 | 1 | 0 |
| 0 => nicht reflektierende Fläche | 240° bis | 300° | 1 | 0 | 0 |
| | 300° bis | 360° | 1 | 0 | 1 |

| Demontage Manipulation | | Signal von Sender 1 | Signal von Sender 2 | Signal von Sender 3 |
|---|---|---|---|---|
| | | 0 | 0 | 0 |
| | | 1 | 1 | 1 |

0° des Drehelements ist, wenn die Mitte der spiegelnden Fläche auf 6 Uhr steht.
0° der Dioden ist bei 3 Uhr.
Positive Zählrichtung ist gegen den Uhrzeigersinn.

EP 1 795 868 A2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0380046 A
- WO 2004079302 A